# EUROPEAN PATENT APPLICATION

(11) **EP 3 879 467 A1**
(43) Date of publication of application: **15.09.2021**
(21) Application number: 21161601.6
(22) Date of filing: 09.03.2021
(51) Int. Cl.: G06Q 10/02

(54) **SYSTEM AND METHOD FOR A FILTER-DEFERRED CALENDAR FOR A MULTI-INSTANCED RENTAL INVENTORY**

(30) Priority: 10.03.2020 US 202062987503 P; 16.10.2020 US 202017072390
(71) Applicant: Navarch Rentals (dba Skipti), Albuquerque, NM 87102 (US)
(72) Inventor: Arner, Michael, Albuquerque, NM New Mexico 87111 (US)
(74) Representative: Hellmich, Wolfgang

(57) **Abstract**

A method for facilitating online rental reservations from an online filter-deferred calendar for multi-instanced rental inventory includes the following steps. First, taking inventory of all item instances within a geographic region. Next, assigning a selection order to each item instance within the geographic region. Next, entering availability of each item instance on an individual availability calendar corresponding to each item instance. Next, displaying the individual availability calendar for the item instance with a highest selection order to a user via a user interface. Next, entering a start date and an end date for the item rental by the user via the user interface. Next, checking sequentially each item instance's individual availability calendar and determining a specific item instance that satisfies the entered start date and end date. The checking starts with the item instance having a lowest selection order. Next, reserving the specific item instance that satisfies the entered start date and end date. Finally, reassigning a new selection order to all item instances within the geographic region.

## Description

### Field of the Invention

The present invention relates to a system and a method for facilitating online rental reservations from one or more inventories, and more particularly to an online filter-deferred calendar for multi-instanced rental inventory.

### Background of the Invention

Many Internet-based applications allow users to reserve inventoried items from a finite selection of instances within a specific item type. Examples include websites facilitating online reservations for seats on an air flight (https://www.southwest.com/). rooms in a hotel (https://www.thetrinityhotel.com/reservations). and rental cars in a city (https://www.budget.com/en/home). In such applications, the user is ordinarily asked to choose their desired dates *before* seeing available rental options. The user may have to reselect dates to see other options if, once these dates are selected, the availability or the cost is not to the user's liking. In other applications, where there is only a single instance of each of the items being rented-for example, "the Honeymoon Suite" in a specific hotel or Bed-and-breakfast-the user is ordinarily asked to choose the single specific item they are interested in renting first and they will then be shown a calendar representing available dates for that single resource. The user may have to go back and choose another if the cost or availability for that resource is not to the user's liking. Many of these solutions also have secondary filters (i.e. select type of car or specific seats on a flight) but the initial filter is required from the user before these secondary filters can be applied to offer a refined selection. Some solutions display "flexible dates" where the user interface (Ul) can be more easily adjusted to compare prices but an initial date filter is again required from the user. Currently, there is no existing user-interface in which the user is offered a single availability calendar representing multiple instances of a desired item *upfront,* i.e. before either the date range or the individual item is selected.

### Summary of the Invention

The present invention provides a system and a method for facilitating online rental reservations from one or more inventories, and more particularly to an online filter-deferred calendar for multi-instanced rental inventory.

In general, in one aspect the invention provides a computer-implemented method for generating an online filter-differed calendar for a multi-instanced rental inventory of an item. The method includes the following steps. First, taking inventory of all item instances within a geographic region. Next, assigning a selection order to each item instance within the geographic region. Next, entering availability of each item instance on an individual availability calendar corresponding to each item instance. Next, displaying the individual availability calendar for the item instance with a highest selection order to a user via a user interface. Next, entering a start date and an end date for the item rental by the user via the user interface. Next, checking sequentially each item instance's individual availability calendar and determining a specific item instance that satisfies the entered start date and end date. The checking starts with the item instance having a lowest selection order. Next, reserving the specific item instance that satisfies the entered start date and end date. Finally, reassigning a new selection order to all item instances within the geographic region.

Implementations of this aspect of the invention include the following. The method further includes providing a client software, a server-based application, and a database datastore. The client software is configured to run on a client computing device and the server-based application and database datastore are configured to be hosted and run on a cloud service computing environment. The client software accesses the server-based application and a database datastore via a network connection, and the datastore comprises reservation information for all item instances. The item instance with the highest selection order that satisfies the entered start date and end date is a canonical instance. The individual availability calendar of the canonical instance is checked last. The reassigning of a new selection order to all item instances comprises counting number of future rental days for each item instance and ordering the item instances so that the item instance with the highest number of available rental days is set to the lowest selection order and the item instance with the lowest number of available rental days is set to the highest selection order. The method further includes displaying blackout days in an individual availability calendar for an item instance depicting days when the item instance is already rented. The user cannot select a start date and an end date with intervening blackout days. The geographic region is determined by IP address, GPS coordinates, entered address and/or an address associated with an account. The items that are offered for rent within the geographic region, comprise one of hotel rooms, cars, power equipment, exercise equipment or any item that is available for rent. The user interface includes the individual availability calendar for the item instance with the highest selection order, delivery time slots, return time slots, and a rent command field. The user interface is presented to the user via a mobile communication device, a desktop computer, a laptop computer, or other communication devices that are configured to connect to cloud services via a network. The method further includes taking inventory of all item instances in additional geographic regions. The reserving of the specific item instance that satisfies the entered start and end date is selected first from a geographic region that is closest to the user's location. The item instances within a geographic region are not identical, but share one or more common features. The method further includes selecting or deselecting additional filter criteria. The selecting or deselecting of the additional filter criteria provides instant user interface updates of the specific item's individual availability calendar. The method further includes submitting new inventory items by a third party based on primary selection criteria, but before secondary selection criteria are provided. The availability calendars for item instances of an additional item are stacked onto the availability calendars of the item instances within the geographic region.

In general, in another aspect the invention provides a system for generating an online filter-differed calendar for a multi-instanced rental inventory of an item including a client software, a server-based application, and a database datastore. The client software is configured to run on a client computing device and the server-based application and database datastore are configured to be hosted and run on a cloud service computing environment. The client software accesses the server-based application and a database datastore via a network connection. The database datastore comprises reservation information for one or more instances of an item. The server-based application comprises computer implemented instructions for taking inventory of all item instances within a geographic region, assigning a selection order to each item instance within the geographic region, entering availability of each item instance on an individual availability calendar corresponding to each item instance, displaying the individual availability calendar for the item instance with the highest selection order to a user via a user interface, receiving a start date and an end date for the item rental by the user, checking sequentially each item instance's individual availability calendar and determining a specific item instance that satisfies the entered start date and end date, reserving the specific item instance that satisfies the entered start date and end date, and reassigning a new selection order to all item instances within the geographic region. The checking starts with the item instance having the lowest selection order. The client software comprises the user interface that displays the individual availability calendar for the item instance with the highest selection and receives the start date and the end date for the item rental by the user.

### Brief Description of the Drawings

Some embodiments of the present invention are illustrated as an example and are not limited by the figures of the accompanying drawings, in which like references may indicate similar elements and in which:
FIG. 1 depicts an overview diagram of a three-tiered client-server system used in the implementation of the application for a filter-deferred calendar for multi-instanced rental inventory, according to this invention;
FIG. 2 shows a screenshot of a user interface (Ul) of the application for a filter-deferred calendar for multi-instanced rental inventory, according to this invention;
FIG. 3 depicts a graphical representation of the selection process control flow of the application for a filter-deferred calendar for multi-instanced rental inventory, according to this invention;
FIG. 4 depicts a flow diagram of the method for the filter-deferred calendar for multi-instanced rental inventory, according to this invention;
FIG. 5 depicts a basic relational database schema for the data structures used in the application for a filter-deferred calendar for multi-instanced rental inventory, according to this invention;
FIG. 6 depicts a screenshot of the user interface (Ul) of another embodiment of the application for a filter-deferred calendar for multi-instanced rental inventory, according to this invention; and
FIG. 7 depicts a schematic diagram of a computing system used in the implementation of this invention.

### Detailed Description of the Invention

The present invention provides a three-tiered software system that includes a client software, a server-based application, and a database datastore. The datastore contains reservation information for one or more types of items. At least some of the types of items have multiple instances. They may also be inventoried in one or more geographically disparate locations. In one implementation, the invention provides a website which offers rentals of carpet cleaning machines, with multiple identical machines in each of multiple geographically-disparate depot locations.

The problem of showing a filter-deferred composite availability calendar for many identical rental items is difficult since, without knowing requested rent and return dates in advance, perfect availability information cannot be displayed without simply overlaying the availability calendars for each instance of the inventoried item type. To show a month or two-month view, for example, day-by-day, there will be some inventoried items available and some already reserved. It is impossible to mark a given day as not-available unless all items are rented on that day; but it is also impossible to say the day is an available one just because one or more items are not yet rented on that day because the length of the rental in not known in advance and so an item that is available on a specific day may still not be available for the entire duration of the desired rental.

In the present invention, a strategy is implemented, that displays to the user an availability calendar which presents no false positives (i.e. the "rentable days" for the item type are guaranteed to be rentable) and minimal false negatives (i.e. the number of non-available days matches actually restricted days as nearly as possible). The accuracy of the calendar (i.e., the number of false negatives) will increase with the number of instances of the item type inventoried. In the above mentioned implementation, the current and next month are shown and the user can browse subsequent months to see availability without having to first choose their rental dates.

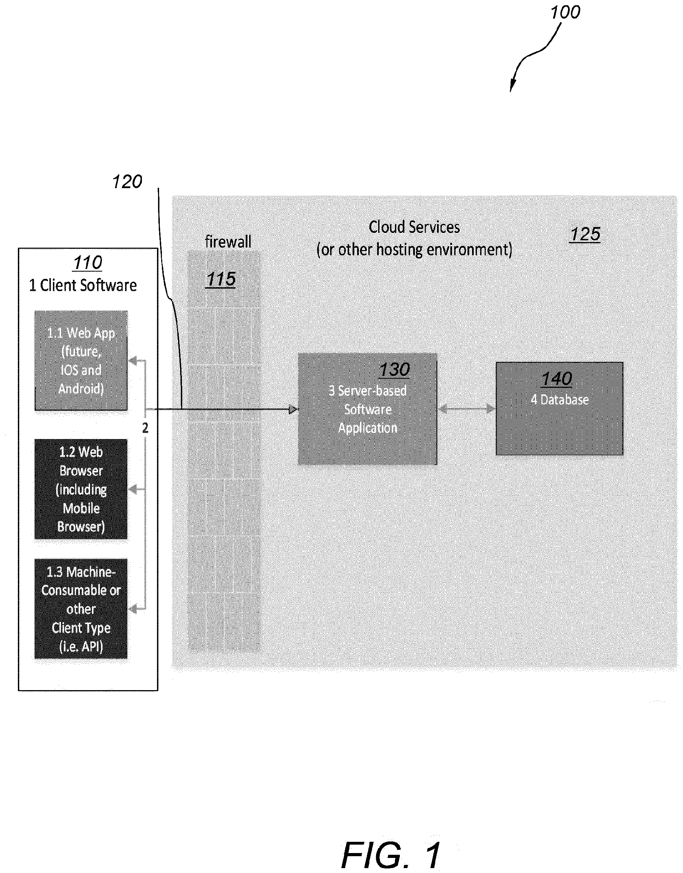

Referring to FIG. 1, a classic three-tiered computing system 100 includes a client 110 connected via network 120 to a Webserver Application 130, and a Database 140. Client 110 may be human-consumable via a web browser 1.1, or a desktop or mobile application 1.2, or a machine-consumable 1.3 via some other process connected to an application programming interface (API).

Examples of a network connection 120 include hypertext markup language (HTML), simple object access protocol (SOAP) or representation state transfer (REST) on top of transmission control protocol (TCP) or user data protocol (UDP). Examples of a webserver include Microsoft IIS and Apache, among others. Database 140 includes relational databases and non-relational databases. A Relational Database such as SQL Server, MySql, POSTgres, Oracle includes data-tables with item type, item instances, and item instance calendar information. A non-relational Database captures effectively identical data-structures. The server based application 130 and the database 140 are hosted on a cloud service environment 125 behind a firewall 115.

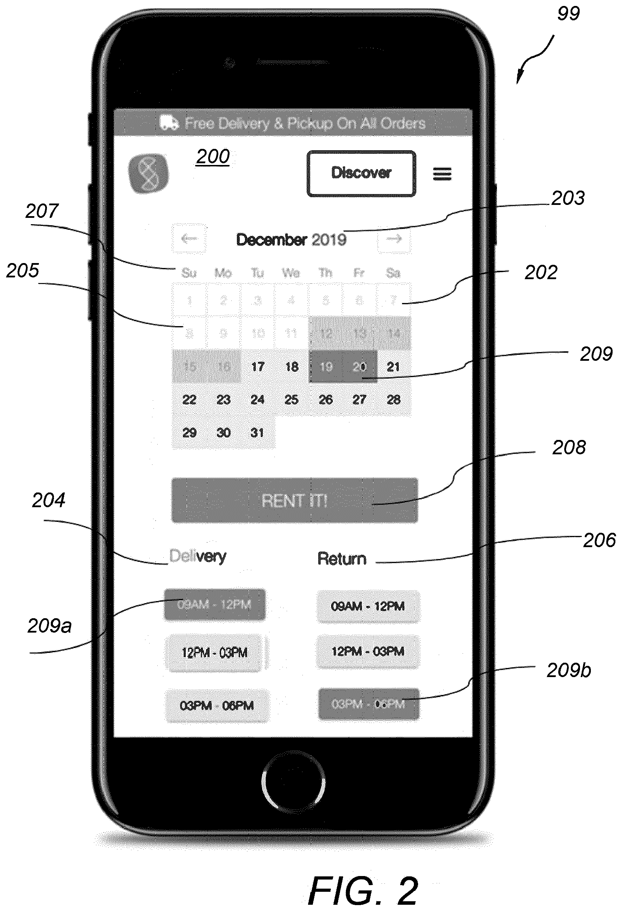

Referring to FIG. 2, in one example, the user interface (Ul) 200 of the reference implementation includes a calendar 202, delivery time slots 204, return time slots 206 and a "rent it!" command field 208. The calendar 202 depicts the month 203(i.e., December), weeks 205 and days 207. The available time slots for delivery 209a and return 209b for the available days 209c within the shown month are highlighted with the same color. As shown in the example of FIG. 2, for the available dates of December 19 and 20 (209c), delivery is available during the time slot of 9AM to 12PM (209a)and return is available during the time slot of 3PM to 6PM (209b). Also shown in the example of FIG. 2, for the available dates of December 12 to16 (209c), delivery is available during the time slots of 12PM to 3PM and 3PM to 6PM (209a) and return is available during the time slots of 9AM to 12PM and 12PM to 3PM (209b). In this example, the user interface 200 is presented through a mobile communication device 99. In other examples the user interface 200 is presented through a desktop computer, a laptop computer, or other communication devices that may connect to the cloud services 125 via a network 120.

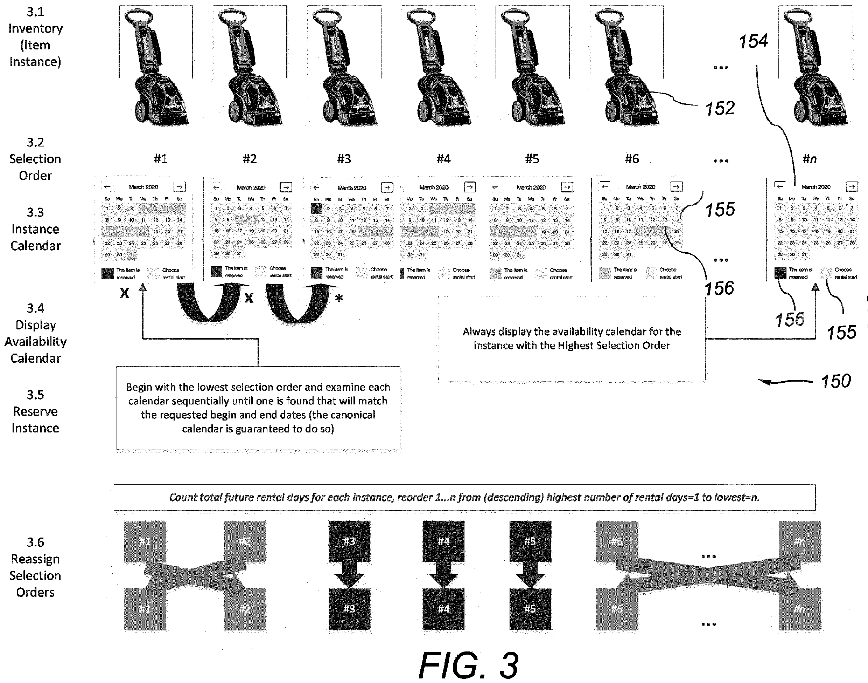

FIG. 3 depicts a graphical representation of the selection process control flow 150 with 3.1 representing a finite number of identical inventory items 152; 3.2 showing the selection order assigned to each item; 3.3 representing each items individual availability calendars 154; 3.4 showing the canonical (the displayed) availability calendar depicting available days 155 and blocked days 156; 3.5 showing the process by which a requested resource is assigned to a specific availability calendar; and 3.6 representing the re-assignment of selection orders.

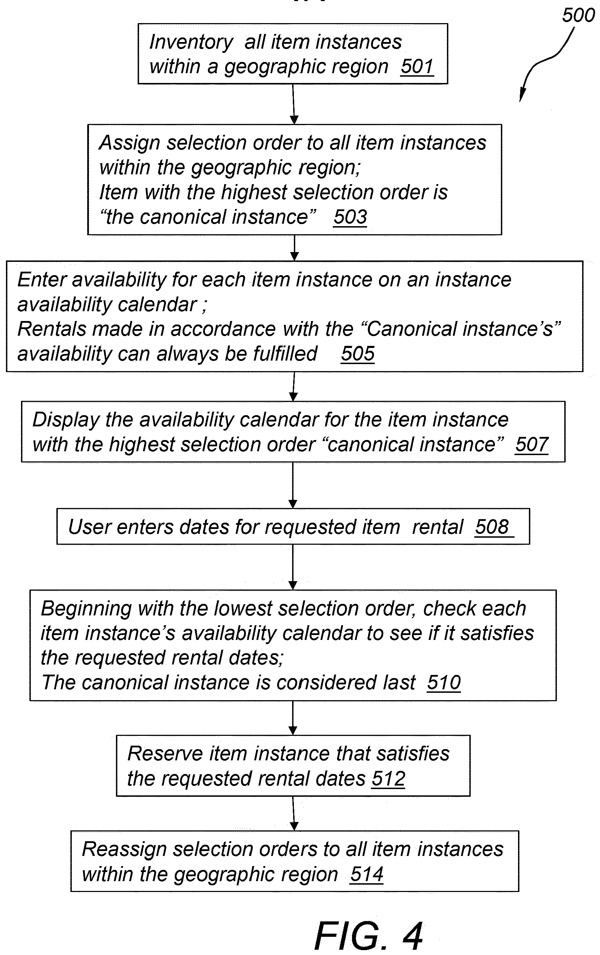

Referring to FIG. 3 and FIG. 4, the process flow diagram 500 for an online filter-deferred calendar for multi-instanced rental inventory includes the following steps. First, an inventory is taken of all item instances within a given geographic area (501). The item instances represent items that are offered for rent, such as hotel rooms, cars, power equipment, exercise equipment or any other item that is available for rent. Next, a selection order is assigned to each item instance within the given geographic region (503). In one example, in a given geographical region, all item instances for a carpet cleaning machine 152 are inventoried (3.1) and are assigned a selection order 1 to n (3.2). A geographical region is determined by IP address, GPS coordinates, entered address and/or the address associated with an account. For example, if there are n=10 item instances of the cleaning machine, they are assigned selection orders one through ten (1-10). Next, for each item instance 152 the rental availability is entered in an instance availability calendar 154 (505). Next, the availability calendar 154 for the item instance with the highest selection order is displayed to the user (507) and the user enters the start and end dates for the requested rental (508). Next, the system examines sequentially the individual availability calendars 154 for each item instance starting with the lowest selection order until it finds one that will match the requested begin and end dates 3.3 (510). Next, the system displays to the user the availability calendar for the item instance with the highest selection order that satisfies the requested begin and end dates (3.4). The item instance with the highest selection order that satisfies the requested begin and end dates is the "canonical instance". The calendar of the "canonical instance" is guaranteed to match the requested begin and end dates and this guarantees that at least one instance can satisfy the request for a rental as long as that request is made considering the canonical item's availability. There are blackout days 156 on the calendar when the item is already rented and the user cannot select begin and end dates with intervening blackout days. Next, the user reserves the item instance that satisfies the requested rental dates (3.5) (512) and then the system reassigns the selection orders to all item instances (3.6) within the given geographic region (514). The future rental days for each item instance is counted and the item instances are reordered so that the item instance with the highest number of available days is set to the lowest selection order (i.e., 1) and the item instance with the lowest number of available days is set to the highest selection order (i.e., n=10).

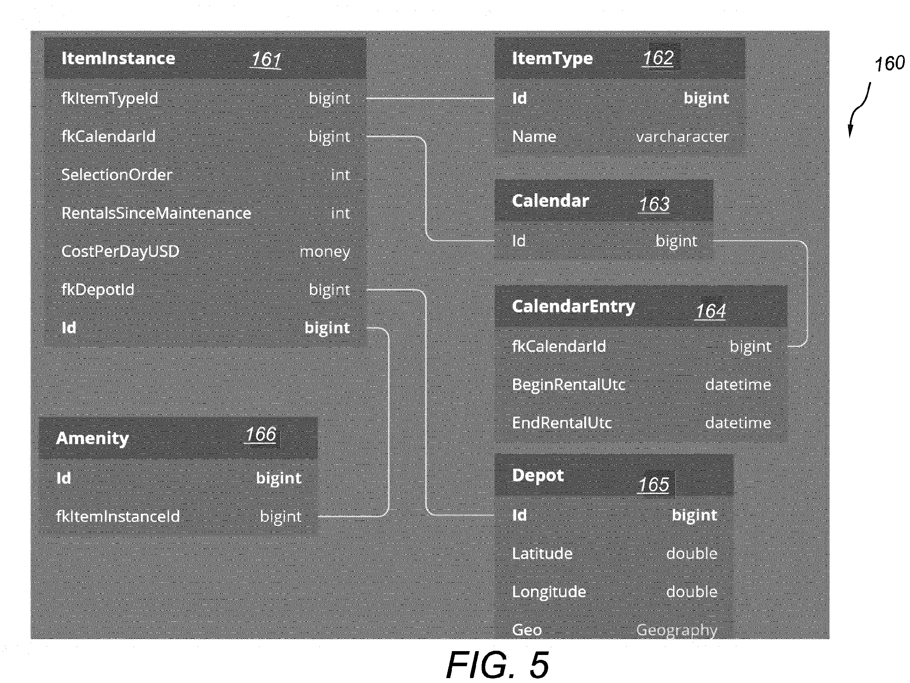

FIG. 5 depicts a basic relational database schema 160 for the referenced data structures. The data structures include Itemlnstance 161, ItemType 162, Calendar 163, CalendarEntry 164, Depot 165 and Amenity 166. Each Itemlnstance 161 includes inputs for item type, availability calendar, selection order, number of rentals since maintenance, cost per day, depot (location) and identification number index(id). Each ItemName 162 includes a name and an id index. Calendar 163 includes an id index. The CalendarEntry 164 includes rental begin and end dates. The Depot 165 includes an id index, and geographic location coordinates such as Latitude and Longitude. The Amenity includes and id index and iteminstanced id. The following examples will reference this schema. A non-relational database captures effectively identical data structures.

The following example 1 depicts pseudocode in SQL-esque format for a basic stored procedure to select calendar events for the Displayed Calendar according to the above described process. The algorithm could be translated into a different query language or different steps to accomplish the same results.

```
       Example 1. Stored Procedure to Get Rented Dates (i.e. Blackout Dates) for an Item Type
 CREATE PROCEDURE [dbo].[sp_GetDisplayableCalendar]
       @selectedItemType BIGINT,
       @beginDisplayUtc DATETIME,
       @endDisplayUtc DATETIME
       AS
 BEGIN
       DECLARE @maxSelectionOrder
             = SELECT TOP 1 II.SelectionOrder FROM FROM ItemType [IT], ItemInstance [II],
               WHERE IT.Id = @selectedItemType
               AND II.fkItemType=IT.Id
               ORDER BY SelectionOrder DESC
       SELECT * FROM ItemType [IT], ItemInstance [II], [Calendar] C, [CalendarEntries] CE
       WHERE IT.Id = @selectedItemType
      AND II.fkItemType=IT.Id
      AND II.SelectionOrder = @maxSelectionOrder
      AND II.fkCalendarId = C.Id
      AND CE.fkCalendarId = C.Id
      AND CE.BeginRentalUtc <= @endDisplayUtc
      AND CE.EndRentalUtc >= @beginDisplayUtc
 END
```

Once the dates for a requested rental are submitted, the "canonical instance" is considered last. Beginning with the lowest selection order, each item instance's calendar is checked to see if it can satisfy the requested rental instead. The "canonical instance" is only used to satisfy the order as a last resort if no other item instance can.

The following example 2 depicts pseudocode in SQL-esque format for a basic stored procedure to reserve an item according to the above described process. The algorithm could be translated into a different query language or different steps to accomplish the same results;

```
             Example 2. Stored Procedure to Select an Item Instance and Reserve it
 CREATE PROCEDURE [dbo].[sp_RentItem]
       @selectedItemType BIGINT,
       @beginRentalUtc DATETIME,
       @endRentalUtc DATETIME
       AS
 BEGIN
       DECLARE @selectedInstanceId BIGINT =
       SELECT TOP 1 II.Id FROM [ItemInstance] II
       WHERE II.fkCalendarId NOT IN (
             //Ineligable Calendars
             SELECT C.Id FROM [CalendarEntries] CE, [Calendar] C
             WHERE
             AND CE.BeginRentalUtc <= @endRentalUtc
             AND CE.EndRentalUtc >= @beginRentalUtc
             AND CE.fkCalendarId = C.Id
      ) ORDER BY II.SelectionOrder ASC
       DECLARE @selectedCalendarId BIGINT = SELECT TOP 1 II.fkCalendarld FROM
       [ItemInstance] II WHERE II.Id = @selectedInstanceld
       INSERT INTO CalendarEntries (fkCalendarId,BeginRentalUtc,EndRentalUtc)
       VALUES (@selectedCalendarId,@beginRentalUtc,@endRentalUtc)
       UPDATE ItemInstance SET RentalsSinceMaintenance = RentalsSinceMaintenance + 1
 END
```

In another embodiment, the selection order (including the canonical calendar) is changed. The total future days rented is calculated for each item and the item with the fewest future days has its availability calendar rotated into the position of the canonical calendar. It may either swap selection order with the prior highest selection order (in the same depot) or all items (again, in the same depot) can have their selection orders reassigned according to future rental days: the fewer the future rented days, the higher the selection order. This reassignment assures that the least-future-booked item instance is always also the canonical instance.

The following example 3 depicts pseudocode in SQL-esque format for a basic stored procedure that will reassign the selection orders based on making the item instances with the smallest number of future reserved days having the highest selection orders. This reassignment could happen, but is not limited to: after every rental, after every *n* rentals, after an item instance is returned, after *n* item instances are returned, or according to some recurring schedule. The algorithm could be translated into a different query language or different steps to accomplish the same results;

```
             Example 3. Stored Procedure to Reassign Selection Orders
 CREATE PROCEDURE [dbo].[sp_ReassignSelectionOrders
       @selectedltemType BIGINT
       AS
 BEGIN
 DECLARE @displayOrder INT = 1
 DECLARE @calendarId BIGINT
 DECLARE @count INT
 DECLARE cursor_inventory CURSOR
 FOR SELECT fkCalendarld,Count(CE.BeginRentalUtc) as futureRentals
       FROM [CalendarEntry] CE, ItemInstanceInstance II
       WHERE II.fkltemType=@selectedItemType
      AND II.fkAvailabilityCalendarld = CE.fkCalendarld
      AND CE.BeginRentalUtc >= GETUTCDATE()
       GROUP BY CE.BeginRentalUtc
       ORDER BY FutureRentals DESC
 DECLARE @instanceId BIGINT
 OPEN cursor_inventory
       FETCH NEXT FROM cursor_inventory INTO @calendarId,@count
       WHILE @@FETCH_STATUS = 0
       BEGIN
             SELECT TOP 1 @instanceId=II.Id FROM ItemInstance II WHERE II.fkCalendarld =
             @calendarId
             UPDATE ItemInstance SET DisplayOrder=@displayOrder WHERE Id=@instanceld
             SET @displayOrder = @displayOrder + 1
             FETCH NEXT FROM cursor_inventory INTO @calendarId,@count
       END;
 CLOSE cursor_inventory
 DEALLOCATE cursor_inventory;
```

In another embodiment, when multiple geographic depot locations can be used to satisfy the rental requested by a single user, the canonical calendars from all depot locations are considered and the one with the fewest future rentals is selected for display. When the dates are selected, the algorithm is run against the item instances in the closest depot first (i.e. to minimize delivery cost), and more remote depots are considered subsequently only if the closer depots cannot satisfy the order. i.e. the algorithm is applied to each item instance in order first of proximity, then of selection order.

In another embodiment, the number of reserved entries for some future interval is taken in account in the query itself rather being subject to an explicit re-ordering event.

The following example 4 depicts pseudocode in SQL-esque format modifying the pseudocode given in example 1 to include geographically diverse sets of instance items (i.e. stored at different depots). The algorithm could be translated into a different query language or different steps to accomplish the same results.

```
             Example 4. Stored Procedure to Determine Calendar Based on
             Selection Order and Geo-Coordinates
 CREATE PROCEDURE [dbo].[sp_GetDisplayableCalendarIncludeGeo]
       @selectedltemType BIGINT,
       @beginDisplayUtc DATETIME,
       @endDisplayUtc DATETIME,
        @userLatitude FLOAT,
        @userLongitude FLOAT
        AS
 BEGIN
       DECLARE @myGeo sys.geography
             = geography::STPointFromText('POINT(' + CAST(@longitude AS VARCHAR(20))
             + ''+CAST(@latitude AS VARCHAR(20)) + ')', 4326)
       DECLARE @maxSelectionOrder
             = SELECT TOP 1 II.SelectionOrder, FROM FROM ItemType [IT], Itemlnstance [II],
             Depot [D]
             WHERE IT.Id = @selectedltemType
             AND ll.fkltemType=IT.Id
             AND II.fkDepotld = D.Id
             ORDER BY SelectionOrder DESC, D.Geo.STDistance(@myGeo) ASC --first by big
             selection order, then by short distance
       SELECT *
       FROM ItemType [IT], ItemInstance [II], [Calendar] C, [CalendarEntries] CE, Depot [D]
       WHERE IT.Id = @selectedItemType
      AND II.fkltemType=IT.Id
      AND II.SelectionOrder = @maxSelectionOrder
      AND II.fkCalendarId = C.Id
      AND CE.fkCalendarId = C.Id
      AND CE.BeginRentalUtc <= @endDisplayUtc
      AND CE.EndRentalUtc >= @beginDisplayUtc
       ORDER BY SelectionOrder DESC, D.Geo.STDistance(@myGeo) ASCEND
```

The following example 5 depicts pseudocode in SQL-esque format modifying the pseudocode given in example 2 to include geographically diverse sets of instance items (i.e. stored at different depots). The algorithm could be translated into a different query language or different steps to accomplish the same results.

```
             Example 5. Stored Procedure to Select an Item Instance Based on Selection Order
             and Geo-Coordinates, and Reserve it
 CREATE PROCEDURE [dbo].[sp_RentItem]
       @selectedltemType BIGINT,
       @beginRentalUtc DATETIME,
       @endRentalUtc DATETIME,
       @userLatitude FLOAT,
       @userLongitude FLOAT
       AS
 BEGIN
       DECLARE @myGeo sys.geography
             = geography::STPointFromText('POINT(' + CAST(@longitude AS VARCHAR(20))
             + ''+CAST(@latitude AS VARCHAR(20)) + ')', 4326)
       DECLARE @selectedInstanceld BIGINT =
       SELECT TOP 1 II.Id FROM [Itemlnstance] II, Depot [D]
       WHERE Il.fkCalendarld NOT IN (
             //Ineligable Calendars
             SELECT C.Id FROM [CalendarEntries] CE, [Calendar] C
             WHERE
             AND CE.BeginRentalUtc <= @endRentalUtc
             AND CE.EndRentalUtc >= @beginRentalUtc
             AND CE.fkCalendarld = C.Id
             AND II.fkDepotId = D.Id
      ) ORDER BY D.Geo.STDistance(@myGeo) ASC , II.SelectionOrder ASC --first by
       closeness, then by SelectionOrder
       DECLARE @selectedCalendarId BIGINT = SELECT TOP 1 II.fkCalendarId FROM
       [Itemlnstance] II WHERE II.Id = @selectedlnstanceld
       INSERT INTO CalendarEntries (fkCalendarld,BeginRentalUtc,EndRentalUtc)
       VALUES (@selectedCalendarId,@beginRentalUtc,@endRentalUtc)
       UPDATE Itemlnstance SET RentalsSinceMaintenance = RentalsSinceMaintenance + 1
 END
```

In another embodiment, the items are not identical, but merely share one or more categories (i.e. category "Honeymoon Suites" in Albuquerque, New Mexico, or category "Restaurants" in Santa Fe, New Mexico). The algorithm can be used to show availability, then after selection, the user may decide from one or more secondary filters which available instance they want to rent (i.e. based on cost, amenities, or other criteria). In this embodiment, an additional step may or may not be introduced between primary and secondary selection. This additional step would allow third party providers to introduce new options given the primary filter. For example, a provider of hotel rooms may not be willing to offer a particular room for the first filter, but once a time period (i.e. an entire week) or particular amenities (breakfast-in-bed) are submitted after the first filter, that room may be deemed more desirable to offer along with other items which also fulfill primary and secondary filter options.

The following example 6 depicts pseudocode in SQL-esque format for a basic stored procedure to return secondary feature information for all available item instances in a selected rental period. The algorithm could be translated into a different query language or different steps to accomplish the same results.

```
             Example 6. Stored Procedures to Return Secondary Filterables for Selected Dates
             (and to Reserve an Itemlnstance Directly)
 CREATE PROCEDURE [dbo].[sp_GetAmenities]
       @selectedltemType BIGINT,
       @beginDisplayUtc DATETIME,
       @endDisplayUtc DATETIME
       AS
 BEGIN
       SELECT * FROM ItemType [IT], ItemInstance [II], [Calendar] C, [CalendarEntries] CE,
      Amenity A
       WHERE IT.Id = @selectedItemType
      AND II.fkltemType=IT.Id
      AND II.fkCalendarId = C.Id
      AND A.fkltemlnstanceld = II.Id
      AND CE.fkCalendarld = C.Id
      AND CE.BeginRentalUtc <= @endDisplayUtc
      AND CE.EndRentalUtc >= @beginDisplayUtc
       GROUP BY II.Id
 END
 CREATE PROCEDURE [dbo].[sp_ReserveltemlnstanceDirectly]
       @itemInstanceId BIGINT,
       @beginDisplayUtc DATETIME,
       @endDisplayUtc DATETIME
       AS
 BEGIN
       DECLARE @selectedCalendarId BIGINT = SELECT TOP 1 II.fkCalendarId FROM
       [ItemInstance] II WHERE II.Id = @selectedInstanceld
       INSERT INTO CalendarEntries (fkCalendarld,BeginRentalUtc,EndRentalUtc)
       VALUES (@selectedCalendarId,@beginRentalUtc,@endRentalUtc)
       UPDATE Itemlnstance SET RentalsSinceMaintenance = RentalsSinceMaintenance + 1
 END
```

In another embodiment, an item needs to be temporarily retired after *n* rentals until it receives maintenance. In this case, the item's availability calendar cannot be considered the canonical calendar and it cannot be selected as a rental either. It is simply removed from consideration until after it has been serviced.

In yet another embodiment, calendars can be "stacked" so that attributes which do not apply directly to the reservable item's amenities can nevertheless be added to the reservation as if they were, and thereby included in the selection process. For example, the calendar(s) for a hotel room in a given location can be joined to the calendars for a nearby Golf Course's available Tee-times, local Museum tours, or other items which could be reserved in conjunction with the primary, reservable item. Thus, a user can select a hotel room knowing that local experiences will also be available during the selected dates and can reserve those experiences (via an interface to the provider) at the same time. In this variation, the UI can update the availability calendar every time a new amenity is selected or de-selected.

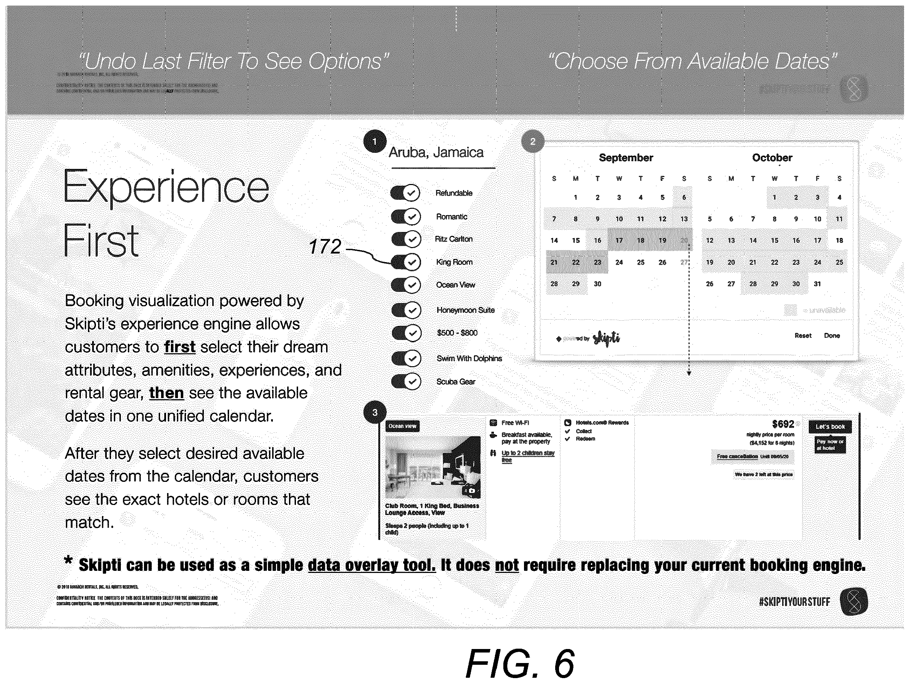

An example of a UI that updates the availability calendar every time a new amenity 172 is selected or de-selected is shown in FIG. 6. In this embodiment, there are two ways in which two or more availability calendars could be stacked:
1. restrictive -- in which every day of the combined calendar represents an intersection of all the component calendars, i.e. a calendar is available in the composite calendar if it is available in all of the stacked calendars (this would be useful for additional amenities which are expected to be available every day the primary item is available) or
2. nonrestrictive - in which a primary calendar determines availability and subsequent calendars are overlaid with a new color to indicate that calendar's availability on each day (this would be useful for additional amenities which are expected to be available one or more days but not necessarily every day the primary item is available).

In this embodiment, interfaces to a third party might be used to automatically reserve the third party's amenities at the same time the primary reservable item is being reserved.

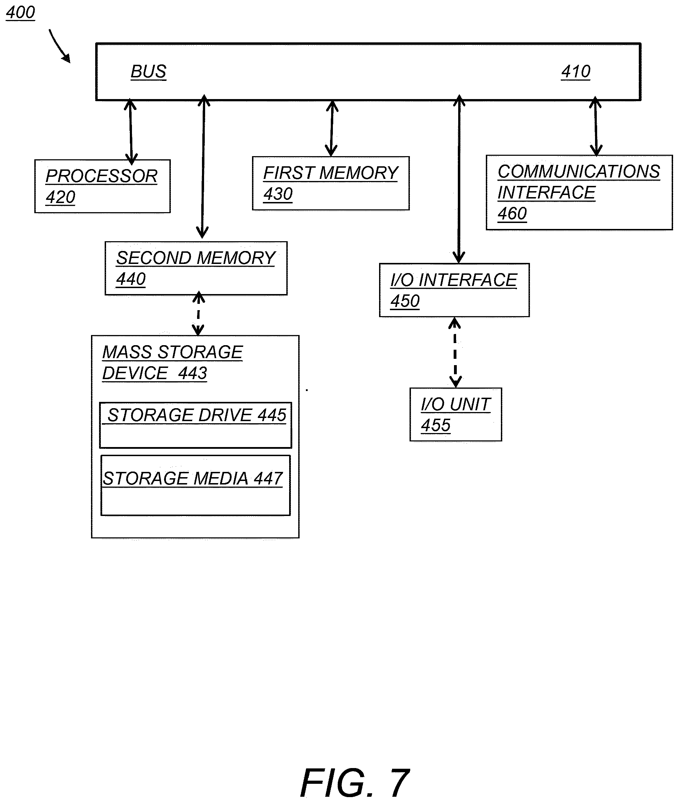

Referring to FIG. 7, an exemplary computer system 400 or network architecture that may be used to implement the system of the present invention includes a processor 420, first memory 430, second memory 440, I/O interface 450 and communications interface 460. All these computer components are connected via a bus 410. One or more processors 420 may be used. Processor 420 may be a special-purpose or a general-purpose processor. As shown in FIG. 7, bus 410 connects the processor 420 to various other components of the computer system 400. Bus 410 may also connect processor 420 to other components (not shown) such as, sensors, and servomechanisms. Bus 410 may also connect the processor 420 to other computer systems. Processor 420 can receive computer code via the bus 410. The term "computer code" includes applications, programs, instructions, signals, and/or data, among others. Processor 420 executes the computer code and may further send the computer code via the bus 410 to other computer systems. One or more computer systems 400 may be used to carry out the computer executable instructions of this invention.

Computer system 400 may further include one or more memories, such as first memory 430 and second memory 440. First memory 430, second memory 440, or a combination thereof function as a computer usable storage medium to store and/or access computer code. The first memory 430 and second memory 440 may be random access memory (RAM), read-only memory (ROM), a mass storage device, or any combination thereof. As shown in FIG. 7, one embodiment of second memory 440 is a mass storage device 443. The mass storage device 443 includes storage drive 445 and storage media 447. Storage media 447 may or may not be removable from the storage drive 445. Mass storage devices 443 with storage media 447 that are removable, otherwise referred to as removable storage media, allow computer code to be transferred to and/or from the computer system 400. Mass storage device 443 may be a Compact Disc Read-Only Memory ("CDROM"), ZIP storage device, tape storage device, magnetic storage device, optical storage device, Micro-Electro-Mechanical Systems ("MEMS"), nanotechnological storage device, floppy storage device, hard disk device, USB drive, among others. Mass storage device 443 may also be program cartridges and cartridge interfaces, removable memory chips (such as an EPROM, or PROM) and associated sockets.

The computer system 400 may further include other means for computer code to be loaded into or removed from the computer system 400, such as the input/output ("I/O") interface 450 and/or communications interface 460. Both the I/O interface 450 and the communications interface 460 allow computer code to be transferred between the computer system 400 and external devices including other computer systems. This transfer may be bi-directional or omni-direction to or from the computer system 400. Computer code transferred by the I/O interface 450 and the communications interface 460 are typically in the form of signals, which may be electronic, electromagnetic, optical, or other signals capable of being sent and/or received by the interfaces.

These signals may be transmitted via a variety of modes including wire or cable, fiber optics, a phone line, a cellular phone link, infrared ("IR"), and radio frequency ("RF") link, among others.

The I/O interface 450 may be any connection, wired or wireless, that allows the transfer of computer code. In one example, I/O interface 450 includes an analog or digital audio connection, digital video interface ("DVI"), video graphics adapter ("VGA"), musical instrument digital interface ("MIDI"), parallel connection, PS/2 connection, serial connection, universal serial bus connection ("USB"), IEEE1394 connection, PCMCIA slot and card, among others. In certain embodiments the I/O interface connects to an I/O unit 455 such as a user interface, monitor, speaker, printer, touch screen display, among others. Communications interface 460 may also be used to transfer computer code to computer system 400. Communication interfaces include a modem, network interface (such as an Ethernet card), wired or wireless systems (such as Wi-Fi, Bluetooth, and IR), local area networks, wide area networks, and intranets, among others.

The invention is also directed to computer products, otherwise referred to as computer program products, to provide software that includes computer code to the computer system 400. Processor 420 executes the computer code in order to implement the methods of the present invention. In one example, the methods according to the present invention may be implemented using software that includes the computer code that is loaded into the computer system 400 using a memory 430, 440 such as the mass storage drive 443, or through an I/O interface 450, communications interface 460, or any other interface with the computer system 400. The computer code in conjunction with the computer system 400 may perform any one of, or any combination of, the steps of any of the methods presented herein. The methods according to the present invention may be also performed automatically, or may be invoked by some form of manual intervention. The computer system 400, or network architecture, of FIG. 7 is provided only for purposes of illustration, such that the present invention is not limited to this specific embodiment.

Several embodiments of the present invention have been described. Nevertheless, it will be understood that various modifications may be made without departing from the scope of the invention. Accordingly, other embodiments are within the scope of the following claims.

## Claims

1. A computer-implemented method for generating an online filter-differed calendar (163, 202) for a multi-instanced rental inventory of an item comprising:
taking inventory of all item instances within a geographic region;
assigning a selection order to each item instance within the geographic region;
entering availability of each item instance on an individual availability calendar (163, 202) corresponding to each item instance;
displaying the individual availability calendar (163, 202) for the item instance with a highest selection order to a user via a user interface;
entering a start date and an end date for the item rental by the user via the user interface;
checking sequentially each item instance's individual availability calendar (163, 202) and determining a specific item instance that satisfies the entered start date and end date, wherein the checking starts with the item instance having a lowest selection order;
reserving the specific item instance that satisfies the entered start date and end date; and
reassigning a new selection order to all item instances within the geographic region.

2. The method of claim 1, further comprising providing a client (110) software, a server-based application, and a database datastore, wherein the client (110) software is configured to run on a client (110) computing device and the server-based application and database datastore are configured to be hosted and run on a cloud service computing environment and wherein the client (110) software accesses the server-based application and a database datastore via a network (120) connection, and wherein the datastore comprises reservation information for all item instances.

3. The method of claim 1 or 2, wherein the item instance with the highest selection order that satisfies the entered start date and end date is a canonical instance and wherein the individual availability calendar (163, 202) of the canonical instance is checked last.

4. The method of one of the preceding claims, wherein the reassigning of a new selection order to all item instances comprises counting number of future rental days (207) for each item instance and ordering the item instances so that the item instance with the highest number of available rental days (207) is set to the lowest selection order and the item instance with the lowest number of available rental days (207) is set to the highest selection order.

5. The method of one of the preceding claims, further comprising displaying blackout days (207) in an individual availability calendar (163, 202) for an item instance depicting days (207) when the item instance is already rented, and wherein the user cannot select a start date and an end date with intervening blackout days (207).

6. The method of one of the preceding claims, wherein the geographic region is determined by IP address, GPS coordinates, entered address or an address associated with an account.

7. The method of one of the preceding claims, wherein the items that are offered for rent within the geographic region, comprise one of hotel rooms, cars, power equipment, exercise equipment or any item that is available for rent.

8. The method of one of the preceding claims, wherein the user interface comprises the individual availability calendar (163, 202) for the item instance with the highest selection order, delivery time slots (204), return time slots (206), and a rent command field (208).

9. The method of one of the preceding claims, further comprising taking inventory of all item instances in additional geographic regions and wherein the reserving of the specific item instance that satisfies the entered start and end date is selected first from a geographic region that is closest to the user's location.

10. The method of one of the preceding claims, wherein the item instances within a geographic region are not identical, but share one or more common features.

11. The method of one of the preceding claims, further comprising selecting or deselecting additional filter criteria and wherein said selecting or deselecting of the additional filter criteria provides instant user interface updates of the specific item's individual availability calendar (163, 202).

12. The method of one of the preceding claims, further comprising submitting new inventory items by a third party based on primary selection criteria, but before secondary selection criteria are provided.

13. The method of one of the preceding claims, wherein availability calendars for item instances of an additional item are stacked onto the availability calendars of the item instances within the geographic region.

14. A system for generating an online filter-differed calendar for a multi-instanced rental inventory of an item comprising:
a client (110) software, a server-based application, and a database datastore;
wherein the client (110) software is configured to run on a client (110) computing device and the server-based application and database datastore are configured to be hosted and run on a cloud service computing environment and wherein the client (110) software accesses the server-based application and a database datastore via a network (120) connection;
wherein the database datastore comprises reservation information for one or more instances of an item;
wherein the server-based application comprises computer implemented instructions for taking inventory of all item instances within a geographic region, assigning a selection order to each item instance within the geographic region, entering availability of each item instance on an individual availability calendar (163, 202) corresponding to each item instance, displaying the individual availability calendar (163, 202) for the item instance with the highest selection order to a user via a user interface, receiving a start date and an end date for the item rental by the user, checking sequentially each item instance's individual availability calendar (163, 202) and determining a specific item instance that satisfies the entered start date and end date, wherein the checking starts with the item instance having the lowest selection order, reserving the specific item instance that satisfies the entered start date and end date, and reassigning a new selection order to all item instances within the geographic region;
wherein the client (110) software comprises the user interface that displays the individual availability calendar (163, 202) for the item instance with the highest selection and receives the start date and the end date for the item rental by the user.

15. The system of claim 14, wherein the database datastore is a non-relational database (140) that captures effectively identical data-structures.
